# EUROPEAN PATENT APPLICATION

(11) **EP 1 757 726 A1**
(43) Date of publication of application: **28.02.2007**
(21) Application number: 05740930.2
(22) Date of filing: 17.05.2005
(51) Int. Cl.: D06M 15/41

(54) **REINFORCEMENT POLYESTER CORDS FOR RUBBERS AND PROCESS FOR PRODUCTION THEREOF**

(30) Priority: 18.05.2004 JP 2004147545
(71) Applicant: Toyo Boseki Kabushiki Kaisha, Osaka-shi, Osaka 530-8230 (JP)
(72) Inventor: KOHASHI, Masanao, TOYO BOSEKI KABUSHIKI KAISHA, Tsuruga-shi, Fukui 9148550 (JP); IMAOKA, Katsutoshi, TOYO BOSEKI KABUSHIKI KAISHA, Tsuruga-shi, Fukui 9148550 (JP)
(74) Representative: Müller-Boré & Partner Patentanwälte
(86) International application number: PCT/JP2005/008959
(87) International publication number: WO 2005/111297

(57) **Abstract**

It is provided a polyester cord for reinforcement of rubber suitable to the use for tire cap ply where a high elastic modulus is available and heat-resisting adhesive property and strength retaining rate upon exposure to high temperature for long time in rubber are significantly improved and also to provide a method for producing the same.

A method for production of polyester cord for reinforcement of rubber, **characterized in that**, in bestowing adhesive property to rubber on a polyester fiber material, four members of (A) a treating solution containing a carrier, (B) an aqueous solution of a blocked isocyanate, (C) a dispersion of an epoxy compound and (D) a mixed solution of resorcinol-formaldehyde-latex (RFL) are combined as a treating solution and said polyester fiber material is subjected to a treatment by means of a one-stage or two or more multi-stage treatment, wherein said polyester fiber material is treated with a first treating solution compounded at least with (A) a treating solution containing a carrier, then treated with a second treating solution where at least (D) a mixed solution of resorcinol-formaldehyde-latex (RFL) is compounded and, after treating with the second treating solution in the final stage, a thermal treatment under a normalizing tension adjusted to not less than 0.2 cN/dtex is carried out.

## Description

### Technical Field of the Invention

The present invention relates to a polyester cord for reinforcement of rubber where strength retaining rate and heat-resisting adhesive property upon exposure to high temperature for long time in rubber are significantly improved and also to a method for producing the same.
The polyester cord for reinforcement of rubber produced by the present invention is suitable to a tire cord and, particularly, to a cap ply cord used in the outer layer part of a belt of radial tire.

### Background Art

Polyester fiber which is represented by polyethylene terephthalate has excellent mechanical characteristics, dimensional stability and durability and has been widely used in the use as industrial materials and, particularly, as reinforcing use for rubber such as tire cord, V belt, conveyor belt and hose.
In the use as a tire cord, characteristics such as high strength, high elastic modulus, low shrinking rate, adhesive property and fatigue resistance are demanded and a polyethylene terephthalate fiber is the mainstream of a carcass ply cord for radial tire in view of dominance in property and cost while, in cap ply cord used in outer layer of belt, heat-resisting adhesive property is demanded particularly strongly and, therefore, Nylon 66 having an excellent adhesive property is the mainstream.

On the other hand, in a Nylon 66 fiber, its elastic modulus is basically low and, therefore, in a tire where durability at high speed is important, countermeasure such as an increase in cord pick is necessary and there is a disadvantage that weight of the tire becomes heavy. Against that, there has been a proposal for the use of polyethylene terephthalate having a higher elastic modulus but it is unable to be applied to actual use because its heat-resisting adhesive property is low (refer, for example, to Japanese Patent Laid-Open No. 59/124,407 A).

It has been said that the cause for lowering of strength and lowering of adhesive force of polyester fiber in rubber compositions is deterioration by the action of amines and water in the rubber compositions and, in order to solve such a disadvantage, there have been many proposals up to now.

For example, there is a proposal where polyester fiber in which amount of carboxyl terminal group is not more than 10 µeq/g is subjected to a treatment with an epoxy compound and a polyisocyanate compound and to an RFL treatment (refer to Japanese Patent Laid-Open No. 51/070, 394 A) but that is not practical because, for example, the treatment with polyisocyanate is conducted in an organic solvent system.

With regard to the problem of heat-resisting adhesive property of polyethylene terephthalate as such, the present inventors proposed a method for the production of a polyester fiber material where an adhesive property with rubber is improved (refer to Japanese Patent Laid-Open No. 2000/008,280 A) but, since no specific use is considered, it does not always have a mechanical characteristic suitable for the use as tire cap ply.

### Brief Description of the Drawing

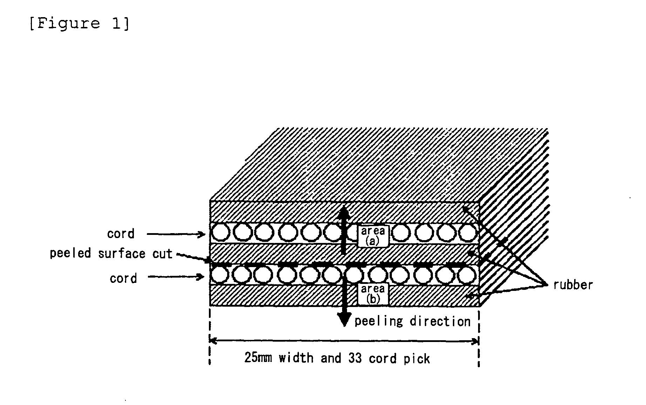

Fig. 1 is a drawing of a test piece used for a test on peeling adhesion.

### Problems that the Invention is to Solve

The present invention has been achieved on the above-mentioned background and an object of the present invention is to provide a polyester cord for reinforcement of rubber suitable to the use for tire cap ply where a high elastic modulus is available and heat-resisting adhesive property and strength retaining rate upon exposure to high temperature for long time in rubber are significantly improved and also to provide a method for producing the same.

### Means for Solving the Problems

In order to solve the above-mentioned problems, the present inventors have carried out intensive studies and, at last, they have achieved the present invention. Thus, the constitution of the present invention is as follows.
1. A method for production of polyester cord for reinforcement of rubber, characterized in that, in bestowing adhesive property to rubber on a polyester fiber material, four members of (A) a treating solution containing a carrier, (B) an aqueous solution of a blocked isocyanate, (C) a dispersion of an epoxy compound and (D) a mixed solution of resorcinol-formaldehyde-latex (RFL) are combined as a treating solution and said polyester fiber material is subjected to a treatment by means of a one-stage or two or more multi-stage treatment, wherein said polyester fiber material is treated with a first treating solution compounded at least with (A) a treating solution containing a carrier, then treated with a second treating solution where at least (D) a mixed solution of resorcinol-formaldehyde-latex (RFL) is compounded and, after treating with the second treating solution in the final stage, a thermal treatment under a normalizing tension adjusted to not less than 0.2 cN/dtex is carried out.
2. The method for production of polyester cord for reinforcement of rubber according to the above 1, wherein, in bestowing adhesive property to rubber on a polyester fiber material, the treating stages are in two stages in which, after treating with a first treating solution where (A) a treating solution containing a carrier and (B) an aqueous solution of a blocked isocyanate are compounded, a thermal treatment is carried out and then a treatment using a second treating solution compounded with (B) an aqueous solution of a blocked isocyanate, (C) a dispersion of an epoxy compound and (D) a mixed solution of resorcinol-formaldehyde-latex (RFL) is carried out.
3. The method for production of polyester cord for reinforcement of rubber according to the above 1, wherein, in bestowing adhesive property to rubber on a polyester fiber material, the treating stages are in three stages in which, after treating with a first treating solution where (A) a treating solution containing a carrier and (B) an aqueous solution of a blocked isocyanate are compounded, a thermal treatment is carried out and then a second-stage treatment and a third-stage treatment both using a second treating solution compounded with (B) an aqueous solution of a blocked isocyanate, (C) a dispersion of an epoxy compound and (D) a mixed solution of resorcinol-formaldehyde-latex (RFL) are carried out.
4. The method for production of polyester cord for reinforcement of rubber according to the above 1 to 3, wherein the normalizing tension is not less than 0.3 cN/dtex.
5. The method for production of polyester cord for reinforcement of rubber according to the above 1 to 3, wherein the normalizing tension is not less than 0.4 cN/dtex.
6. The method for production of polyester cord for reinforcement of rubber according to the above 1 to 5, wherein the polyester fiber material is a cord in which a polyethylene terephthalate fiber treated with an epoxy compound having two or more epoxy groups in a spinning, stretching or after-treating step is twisted and a textile by weaving of the same.
7. A tire cap ply cord using the polyester cord for reinforcement of rubber produced by the method mentioned in the above 1 to 6.
8. A polyester cord for reinforcement of rubber produced by the method mentioned in the above 1 to 6 in which tenacity of the treated cord is not less than 4.5 cN/dtex, elongation upon loading with 2.0 cN/dtex is not more than 5.0% and, in a peeling adhesion test at ambient temperature, a rubber coating rate after the initial vulcanization is not less than 90% while a rubber coating rate after an over-vulcanization is not less than 80%.
9. A polyester cord for reinforcement of rubber produced by the method mentioned in the above 1 to 6 in which tenacity of the treated cord is not less than 4.5 cN/dtex, elongation upon loading with 2.0 cN/dtex is not more than 5.0% and, in a peeling adhesion test upon heating under the atmosphere of 150°C, a rubber coating rate after the initial vulcanization is not less than 90% while a rubber coating rate after an over-vulcanization is not less than 80%.
10. The polyester cord for reinforcement of rubber according to the above 8 to 9, wherein the elongation of the treated cord upon loading with 2.0 cN/dtex is not more than 4.0%.
11. The polyester cord for reinforcement of rubber according to the above 8 to 9, wherein the elongation of the treated cord upon loading with 2.0 cN/dtex is not more than 3.5%.
12. The polyester cord for reinforcement of rubber according to the above 8 to 11, wherein the twist coefficient K of the treated cord expressed by K = T√D is not more than 2, 500 in which T is cable twist numbers (twisting times/10 cm) and D is a standard fineness of the cord (dtex).
13. A tire cap ply cord using the polyester cord for reinforcement of rubber mentioned in the above 8 to 12.

### Advantages of the Invention

According to the present invention, it is able to provide a polyester cord for reinforcement of rubber suitable to the use for tire cap ply where a high elastic modulus is available and heat-resisting adhesive property and strength retaining rate upon exposure to high temperature for long time in rubber are significantly improved as well as a method for producing the same.

### Best Mode for Carrying Out the Invention

As hereunder, the present invention will be illustrated in detail.
The polyester fiber material constituting the polyester cord of the present invention is a cord (raw cord) prepared by twisting of stretched yarn (original yarn) obtained by melt spinning of polyethylene terephthalate or polyethylene terephthalate where a few amount of the third component is copolymerized therewith or is a textile prepared by weaving the same.
The above-mentioned original yarn of polyethylene terephthalate may comprise a polyester fiber where its surface is activated by an epoxy compound, an isocyanate compound, etc. during the stage of non-stretched filament or stretched filament as shown in Japanese Patent Publication No. 47/049,768 B and is particularly preferred to be that where said original yarn of polyethylene terephthalate is treated with an epoxy compound having two or more epoxy groups during the spinning, stretching or after-treating step. Preferred examples of the epoxy compound are polyglycidyl ether compounds of aliphatic polyhydric alcohols such as glycerol polyglycidyl ether, diglycerol polyglycidyl ether, polyglycerol polyglycidyl ether and sorbitol polyglycidyl ether. Products where original yarn treated with an epoxy compound and a hardening agent is subjected to a heating treatment at the temperature of 40°C to 80°C for 24 hours to 240 hours is also preferred.

Tenacity of the treated cord subjected to a treatment for bestowing the adhesive property to rubber (hereinafter, it will be referred to as a dipping treatment) is not less than 4.5 cN/dtex and, preferably, not less than 5.0 cN/dtex. That is essential as a fundamental property of tire cord and, when it is less than that, the product is not suitable for use as tire cord. Here, tenacity of cord is a value calculated by dividing the strength of cord by a standard fineness in cord constitution (in the case where two original yarns of 1, 100 dtex are twisted for example, it is 2,200 dtex).

As an evaluating measure of elastic modulus, elongation upon loading with 2.0 cN/dtex (hereinafter, it will be referred to as an intermediate elongation) is used and the intermediate elongation is not more than 5.0%, preferably not more than 4.0% and, more preferably, not more than 3.5%. It is a publicly known fact that, when a cord of high elastic modulus is used in a tire cap ply cord, reduction in road noise of the tire and enhancement in high-speed property are achieved. When the intermediate elongation is higher than 5.0%, the product is not suitable as a tire cap ply cord.

The intermediate elongation of the above-mentioned treated cord is greatly dependent upon tension of the thermal treatment zone (normalizing zone) in the final stage in the dipping treatment and is not less than 0.2 cN/dtex, preferably not less than 0.3 cN/dtex and, more preferably, not less than 0.4 cN/dtex. When the normalizing tension is less than 0.2 cN/dtex, it is not possible to produce an aimed cord having high elastic modulus.

With regard to a factor contributing in the intermediate elongation, twist numbers of cord may be exemplified and the twist coefficient K of the treated cord expressed by K = T√D is preferred to be not more than 2,500. In this formula, T is cable twist numbers (twisting times/10 cm) and D is a standard fineness of the cord (dtex). When the twist coefficient K is more than 2,500, the outcome is that not only a cord of high elastic modulus is not produced but also the strength lowers whereby the product is not suitable as a tire cap ply cord.

As an evaluating measure for heat-resisting adhesive property, rubber coating rate in a peeling adhesion test between rubber and cord upon over-vulcanization and/or heating is used. Adhesive force of polyester tire cord usually lowers when it is exposed to high temperature for long time in rubber. Such a phenomenon is believed to be due to deterioration of rubber, adhesive (dip resin) and fiber as well as interface thereof. In the conventional polyester tire cord, rubber is rarely adhered to the cord after an adhesive failure and, therefore, breakage happens in fiber and/or adhesive or interface thereof earlier than the cohesion failure of rubber. On the contrary, in Nylon 66 having an excellent heat-resisting adhesive property, cord after adhesive failure is mostly coated by rubber and the broken site is not a layer from the fiber to the adhesive but is transferred to the rubber side. From such a viewpoint, it is possible to judge the degree of heat-resisting adhesive property by means of evaluation of rubber coating rate. In the use for tire cap ply, it is necessary that the rubber coating rate after the initial vulcanization is not loess than 90% and the rubber coating rate after an over-vulcanization is not less than 80% in any of atmosphere of ambient temperature and atmosphere of high temperature of 150°C. If the rate is less than the above, the product is not suitable as a tire cap ply cord.

In a dipping treatment, a one-stage or two- or more multi-stage is carried out using a treating solution in which the four - (A) a treating solution containing a carrier, (B) an aqueous solution of a blocked isocyanate, (C) a dispersion of an epoxy compound and (D) a mixed solution of resorcinol-formaldehyde-latex (RFL) - are combined. Preferably, there is conducted a two-stage treatment in which, after a treatment with a first treating solution where (A) a treating solution containing a carrier and (B) an aqueous solution of a blocked isocyanate are compounded is carried out, a thermal treatment is conducted and then a treatment with a second treating solution where (B) an aqueous solution of a blocked isocyanate, (C) a dispersion of an epoxy compound and (D) a mixed solution of resorcinol-formaldehyde-latex (RFL) are compounded is carried out. More preferably, there is conducted a three-stage treatment in which, after a treatment with the above-mentioned first treating solution, a thermal treatment is conducted and then the treatment with the above-mentioned second treating solution is repeatedly carried out for two times.

The above-mentioned first treating solution is preferred to be compounded with 40 to 95 parts by weigh of (B) the blocked isocyanate solid to 100 parts by weight of the total solid. When it is less than 40 parts by weight, cross-linking of the resin is insufficient and a sufficient heat-resisting adhesive property is not achieved while, when it is more than 95 parts by weight, no sufficient heat-resisting adhesive property is achieved since the carrier component is small. Adhered amount of the resin of the first treating solution to the polyester fiber is preferred to be 1 to 5% by weight. When it is less than 1% by weight, no sufficient heat-resisting property is achieved while, when it is more than 5% by weight, there are some cases where cord becomes hard whereby strength lowers, fatigue resistance lowers and generation of dipped dregs becomes high. Thus, that is not preferred in view of quality.

The above-mentioned second treating solution is preferred to be compounded with 5 to 40 parts by weigh of (B) the blocked isocyanate solid to 100 parts by weight of the total solid. When it is less than 5 parts by weight, cross-linking of the resin is insufficient and a sufficient heat-resisting adhesive property is not achieved while, when it is more than 40 parts by weight, no sufficient initial adhesive property is achieved since the RFL component is too small. Further, the second treating solution is preferred to be compounded with 0.5 to 10 part (s) by weight of (C) epoxy compound solid to 100 parts by weight of the total solid. No good adhesive property is achieved when the amount is less than or more than the above range. More preferably, it is 0.5 to 6 part(s) by weight. Adhered amount of the resin of the second treating solution to the polyester fiber is preferred to be 2 to 10% by weight. When it is less than 2% by weight, no sufficient initial adhesion and heat-resisting adhesive property is achieved while, when it is more than 10% by weight, there are some cases where adhesive property rather lowers due to generation of blister, etc. or cord becomes hard whereby strength lowers, mechanical characteristic such as fatigue resistance lowers and generation of dipped dregs becomes high. Thus, that is not preferred in view of quality.

The treating solution containing a carrier (A) according to the present invention is that a carrier is dissolved, dispersed or emulsified in water and, in the solution, there may be contained solvent, dispersed solution, adjuvant such as emulsifier or stabilizer, spinning oil, etc. other than the carrier.
Although its action is not fully clear, the carrier mentioned herein is a substance which is impregnated and diffused into the polyester fiber so that swelling of the polyester fiber is enhanced and inner structure of the fiber is changed whereby molecules of the adhesive are apt to come thereinto. Thus, the action of the carrier is well utilized so that the aqueous solution of the blocked isocyanate, the dispersion of the epoxy compound and the RFL solution are more strongly bonded to the polyester fiber so as to enhance the heat-resisting adhesive property.

Examples of a substance preferred as a carrier are a phenol derivative such as p-chlorophenol or o-phenylphenol, a halogenated benzene such as monochlorobenzene or trichlorobenzene and a reaction product of resorcinol with p-chlorophenol and formaldehyde. Particularly preferred example is a reaction product of resorcinol with p-chlorophenol and formaldehyde.

With regard to the treating solution (D) RFL, a mixed aqueous solution of an initial condensate prepared by the reaction of resorcinol with formalin under an acidic or alkaline catalyst and one or more member (s) of styrene butadiene latex, carboxy-modified styrene butadiene latex, styrene butadiene vinylpyridine latex, carboxy-modified styrene butadiene vinylpyridine latex, acrylonitrile butadiene latex, natural rubber and polybutadiene latex may be used. Preferably, styrene butadiene vinylpyridine latex or carboxy-modified styrene butadiene vinylpyridine latex is used whereby an excellent heat-resisting adhesive property is able to be achieved. Any of known art may be adopted for a compounding ratio of resorcinol, formalin and latex.

In Japanese Patent Publication No. 60/031,950 B, a dispersion of blocked diisocyanate and/or epoxy resin is used as a component other than RFL and, as a result of the intensive investigation of the present inventors, it has been found that an excellent heat-resisting adhesive property is achieved when the blocked isocyanate in the treating solution (B) is water-soluble and average functional group numbers are not less than 3 or, more preferably, not less than 4. In a dispersible blocked isocyanate, a permeating effect of the treating solution into fiber by its combination with a carrier is insufficient whereupon no good adhesive property is achieved. When the isocyanate is made multi-functional, cord becomes hard as compared with the same adhered amount of the resin and, therefore, it is suggested that cross-linking density of the resin is enhanced whereby there is an advantage that, even when the adhered amount of the resin is decreased, an excellent heat-resisting adhesive property is able to be achieved.

Although there is no particular limitation for the isocyanate component, a polyisocyanate such as tolylene diisocyanate, diphenylmethane diisocyanate or hexamethylene diisocyanate type is preferred and a mixed system of polyisocyanate of a diphenylmethane diisocyanate type (where two-functional diphenylmethane diisocyanate may be mixed therewith) shows an excellent property.

Thermal dissociation temperature of the block agent component is preferred to be 100°C to 200°C and its examples are phenols, lactams and oximes. When the thermal dissociation temperature is lower than 100°C, a cross-linking reaction of the isocyanate starts during a drying stage and impregnation into the fiber becomes non-uniform. On the other hand, when it is higher than 200°C, no sufficient cross-linking reaction is achieved and, in any of those cases, heat-resisting adhesive property lowers.

Although there is no particular limitation for the epoxy resin in the treating solution (C), it is preferred to use a two- or more multi-functional epoxy whereby cross-linking density of the resin becomes high to give an excellent heat-resisting adhesive property. Preferred examples of the epoxy compound are glycerol polyglycidyl ether, diglycerol polyglycidyl ether, polyglycerol polyglycidyl ether and sorbitol polyglycidyl ether and the polyglycidyl ether compound of aliphatic polyhydric alcohol as such showed an excellent property.

The fact that permeation and diffusion of isocyanate into fiber becomes more uniform by the use of a water-soluble blocked isocyanate and the isocyanate more effectively acts as a scavenger for amine in the rubber compositions causing the lowering of heat-resisting adhesive force and the fact that cross-linking density of the resin becomes high by the multi-functional isocyanate and barrier property against impregnation of the amine into fiber is enhanced bring about a synergistic effect. The action of enhancing the heat-resisting adhesive property is believed to be due to the result that deterioration of the polyester is suppressed by the synergistic effect. That is also suggested by a significant improvement of retaining rate of cord strength after the over-vulcanization.

Such an action becomes more significant by the treatment with a combination of the above-mentioned first treating solution and second treating solution. Thus, it is believed to be as follows that, in the first treating solution, an amine barrier layer by the isocyanate is strongly bonded to the fiber as a result of a carrier effect and significantly suppresses the deterioration of the fiber, the adhesive layer adjacent to the fiber and the interface thereof. After that, in the second treating solution, heat resistance of the RFL resin is enhanced by a cross-linking improving effect of latex by isocyanate and epoxy and, due to the effect of them as a whole, excellent heat-resisting adhesive property and strength retaining rate are achieved.

Further, when treatment with the second treating solution was repeatedly conducted for two times, better heat-resisting adhesive property is able to be achieved using the same adhered amount of the resin than in the case of only one treatment. Such an action is believed to be due to the fact that adhered spots of the resin are improved by a layered application where adhered amount of the resin in one application is reduced.

The polyester cord of the present invention produced as above is such an epoch-making one that it has a high elastic modulus which is suitable for the use as a tire cap ply and, in addition, has a significantly improved strength retaining rate and heat-resisting adhesive property when exposed to high temperature for long time in rubber.

### Examples

Now the present invention will be specifically illustrated by way of the following Examples and Comparative Examples although the present invention is not limited thereto. Incidentally, each of the property data was measured by the following method.

### (Strength and elongation)

In accordance with JIS L 1017 8.5 (2002), strength and elongation were measured by a tensile test meter after being allowed to stand for more than 24 hours in a constant-temperature chamber where temperature and humidity were controlled to 20°C and 65% RH, respectively.

### (Fineness)

In accordance with JIS L 1017 8.3 (2002), fineness was measured after being allowed to stand for more than 24 hours in a constant-temperature chamber where temperature and humidity were controlled to 20°C and 65% RH, respectively.

### (Pull-out adhesion)

Evaluation was conducted by an H test where a T test (method A) of JIS L 1017, Attachment 1 3.1(2002), was improved.
The treated cord was embedded in the length of 1 cm into rubber for tire and vulcanized at 140°C for 40 minutes (initial vulcanization) or at 170°C for 60 minutes (over-vulcanization) and the force required for pulling out the cord from rubber at ambient temperature at 300 mm/minute was expressed in N/cm.

### (Peeling adhesion)

Measurement was conducted by a method where "Peeling Test for Cloth and Vulcanized Rubber" in JIS K 6256 5.(1999) was improved. A test piece as shown in Fig. 1 where the treated cord and rubber for tire were layered was prepared (thickness and width of rubber at the peeled surface between cord and cord were 0.7 mm and 25 mm, respectively and cord pick was 33) and vulcanized at 140°C for 40 minutes (initial vulcanization) or at 170°C for 60 minutes (over-vulcanization), upper and lower areas of the cut in the test piece (the areas (a) and (b) in Fig. 1) were pinched at ambient temperature and the force required for peeling of at 50 mm/minute using a tensile strength meter was expressed in N/25 mm. The test piece was further subjected to a thermal treatment in an oven at 150°C for 10 minutes and the peeling force was measured similarly under that atmosphere (upon heating).
After the test, rubber coating rate of the cord on the peeled area was evaluated by naked eye. When the cord was completely covered by rubber, the coating rate thereof was defined 100% while the state where no rubber was adhered at all was defined 0%.

### (Strength deterioration in rubber)

The treated cord was embedded in rubber and vulcanized at 170°C for 180 minutes, the cord was taken out from the rubber, strength after vulcanization was measured and the strength deterioration in rubber was represented as the retaining rate as compared with the state before vulcanization.

### [Example 1]

Polyethylene terephthalate chips where intrinsic viscosity was 0. 95 dl/g were extruded by melting from a spinning nozzle having 190 pores at spinning temperature of 300°C, passed through a heating zone of 320°C, cooled and solidified by cooling air of 20°C, taken out at a spinning speed of 550 m/minute and stretched at a stretching rate of 5.8-fold and sorbitol polyglycidyl ether which is an epoxy compound was bestowed and rolled after releasing to an extent of 30%. Two of the resulting original yarns of polyethylene terephthalate each being 1, 100 dtex and 190 filaments (intrinsic viscosity: 0.88 dl/g; tenacity: 8.3 cN/dtex) were twisted together to give a raw cord where twist numbers were 47 x 47 (t/10 cm).
The cord was dipped in a first treating solution and the cord to which the treating solution was applied was squeezed with a squeezing roll where pressure was adjusted so that an excessive solution was removed. After that, the cord was dried in an oven of 120°C for 56 seconds together with applying a stretching rate of 4.0% and then subjected to a thermal treatment in an oven of 235°C for 45 seconds. The hot stretch tension at that time was 11.0 N/cord (0.50 cN/dtex).
After that, the cord was dipped in the second treating solution and an excessive solution was removed by air. Then the cord was dried in an oven of 120°C for 56 seconds together with giving a relaxing rate of -2.0% and then subjected to a thermal treatment in an oven of 235°C for 45 seconds. The normalizing tension at that time was 5.6 N/cord (0.25 cN/dtex). Compounding composition of the first treating solution and of the second treating solution used in Example 1 are shown in Table 1 and Table 2, respectively.

### [Example 2]

Relaxing rate upon drying and thermal treatments after application of the second treating solution in the treatment of Example 1 was changed to -1.0%. The normalizing tension at that time was 8.1 N/cord (0.37 cN/dtex). Besides the above, a dipping treatment was carried using the same raw cord and treating solution as those in Example 1.

### [Example 3]

Relaxing rate upon drying and thermal treatments after application of the second treating solution in the treatment of Example 1 was changed to 0%. The normalizing tension at that time was 10.6 N/cord (0.48 cN/dtex). Besides the above, a dipping treatment was carried using the same raw cord and treating solution as those in Example 1.

### [Example 4]

In the treatment of Example 1, raw cord whose twist numbers are 33 x 33 (t/10 cm) was used and relaxing rate upon drying and thermal treatments after application of the second treating solution was changed to 0%. The normalizing tension at that time was 14.1 N/cord (0.64 cN/dtex). Besides the above, a dipping treatment was carried using the same treating solution as those in Example 1.

### [Example 5]

In the treatment of Example 1, solid concentration of the second treating solution was changed to 14%. Relaxing rate upon drying and thermal treatments after application of the second treating solution was changed to 0%. After that, 14% of the second solution was applied again and drying and thermal treatments were conducted together with giving a relaxing rate of 0%. Normalizing tension in the final treatment of third stage at that time was 10.3 N/cord (0.47 cN/dtex). Besides the above, a dipping treatment was carried using the same raw cord and treating solution as those in Example 1.

### [Comparative Example 1]

Relaxing rate upon drying and thermal treatments after application of the second treating solution in the treatment of Example 1 was changed to -4.0%. The normalizing tension at that time was 3.5 N/cord (0.16 cN/dtex). Besides the above, a dipping treatment was carried using the same raw cord and treating solution as those in Example 1.

### [Comparative Example 2]

Relaxing rate upon drying and thermal treatments after application of the second treating solution in the treatment of Example 4 was changed to -6.0%. The normalizing tension at that time was 3.1 N/cord (0.14 cN/dtex). Besides the above, a dipping treatment was carried using the same raw cord and treating solution as those in Example 4.

### [Comparative Example 3]

As representative examples of carrier + RFL formulation containing no blocked isocyanate and epoxy, the treating solutions as shown in Table 3 and Table 4 were used as a first treating solution and a second treating solution, respectively. Besides the above, a dipping treatment was carried out using the same raw cord under the same condition as in Example 1.

Table 5 shows twist numbers, dipping conditions and properties of the treated cord for Examples 1 to 5 and Comparative Examples 1 to 3.
It is noted by comparison of Examples 1, 2 and 3 that, when a normalizing tension is increased, an intermediate elongation lowers or, in other words, high elastic modulus is resulted.
In Example 4, normalizing tension under the same relaxing condition increases by lowering the twist numbers and the intermediate elongation further lowers.
In Example 5, the second treating solution was applied twice and the treatment was conducted in three stages in total and, in the same adhered amount of the resin, adhesive property upon over-vulcanization and/or heating and a strength retaining rate after deterioration in rubber are more excellent.
In Comparative Examples 1 and 2, normalizing tension is low and, therefore, an intermediate elongation increases and elastic modulus is insufficient.
In Comparative Example 3, a treating solution where heat-resisting adhesive property is not taken into consideration is used and, therefore, adhesive property upon over-vulcanization and/or heating clearly lowers and, in addition, a strength retaining rate after deterioration in rubber lowers whereby heat resistance is insufficient.

**[Table 1] First Treating Solution (Treating solution A) of <Example 1>**

| | Part(s) by Wt | Part(s) by Wt of Solid |
|---|---|---|
| Water | 75.0 | - |
| Carrier (Chemical A) | 2.5 | 0.5 |
| Aqueous Solution of Isocyanate (Chemical B) | 22.5 | 6.8 |
| Total | 100 | 7.3 |

| | | |
|---|---|---|
| Chemical A: Denabond manufactured by Nagase Chemtex K. K. (aqueous ammonia solution of a condensate of chlorophenol, formalin and resorcinol; solid: 20%) Chemical B: Elastron BN-27 manufactured by Daiichi Kogyo Seiyaku K. K. (blocked polyurethane prepolymer; solid: 30%; numbers of functional groups: ca. 5) | | |

**[Table 2] Second Treating Solution (Treating Solution B) of <Example 1>**

| | | | Part(s) by Wt | Part(s) by Wt of Solid |
|---|---|---|---|---|
| Aqueous Solution of Isocyanate (Chemical B) | | | 25.0 | 7.5 |
| Dispersion of Epoxy | | Water | 21.3 | - |
| | | Epoxy Compound (Chemical C) | 1.3 | 1.3 |
| | | Surfactant (Chemical D) | 0.2 | 0.15 |
| RFL | Pre-Maturing (25°C for 6 hrs) | Water | 15.4 | - |
| | | Resorcinol | 0.9 | 0.9 |
| | | 37% Aqueous Solution of Formalin | 1.3 | 0.5 |
| | | 12% Aqueous Solution of NaOH | 0.4 | 0.05 |
| | Post-Maturing (25°C for 20 hrs) | Latex (Chemical E) | 25.6 | 10.5 |
| | | Latex (Chemical F) | 5.1 | 2.5 |
| | | Water | 2.5 | - |
| | | 25% Aqueous Ammonia | 1.0 | 0.25 |
| Total | | | 100.0 | 23.7 |

| | | | | |
|---|---|---|---|---|
| Chemical A: Denabond manufactured by Nagase Chemtex K. K. (aqueous ammonia solution of a condensate of chlorophenol, formalin and resorcinol; solid: 20%) Chemical B: Elastron BN-27 manufactured by Daiichi Kogyo Seiyaku K. K. (blocked polyurethane prepolymer; solid: 30%; numbers of functional groups: ca. 5) Chemical C: Denacol EX-614 manufactured by Nagase Chemtex K. K. (sorbitol polyglycidyl ether) Chemical D: Neocol P manufactured by Daiichi Kogyo Seiyaku K. K. (sodium salt of dialkylsulfosuccinate; solid: 75%) Chemical E: SNX-7046 manufactured by Nippon A&L K. K. (copolymer of styrene, butadiene and 2-vinylpyridine; solid: 41%) Chemical F: J-9049 manufactured by Nippon A&L K. K. (copolymer of styrene with butadiene; solid: 49%) | | | | |

**[Table 3] First Treating Solution (Treating Solution C) of <Comparative Example 3>**

| | | | Part(s) by Wt | Part(s) by Wt of Solid |
|---|---|---|---|---|
| RFL | Pre-Maturing (25°C for 48 hrs) | Water | 13.6 | - |
| | | 12% Aqueous Solution of NaOH | 1.4 | 0.2 |
| | | 75% Aqueous Solution of Resorcinol Formalin Resin | 3.4 | 2.6 |
| | | 37% Aqueous Solution of Formalin | 1.0 | 0.4 |
| | | Latex (Chemical E) | 31.8 | 13.0 |
| Carrier | Post-Maturing (23°C for 1 hr) | Chemical A | 30.0 | 6.0 |
| | | Water | 18.8 | - |
| Total | | | 100 | 22.2 |

| | | | | |
|---|---|---|---|---|
| Chemical A: Denabond manufactured by Nagase Chemtex K. K. (aqueous ammonia solution of a condensate of chlorophenol, formalin and resorcinol; solid: 20%) Chemical E: SNX-7046 manufactured by Nippon A&L K. K. (copolymer of styrene, butadiene and 2-vinylpyridine; solid: 41%) | | | | |

**[Table 4] Second Treating Solution (Treating Solution D) of <Comparative Example 3>**

| | | | Part(s) by Wt | Part(s) by Wt of Solid |
|---|---|---|---|---|
| RFL | Maturing (25°C for 24 hrs) | Water | 47.2 | - |
| | | 12% Aqueous Solution of NaOH | 2.1 | 0.3 |
| | | 75% Aqueous Solution of Resorcinol Formalin Resin | 4.9 | 3.7 |
| | | 37% Aqueous Solution of Formalin | 1.4 | 0.5 |
| | | Latex (Chemical E) | 44.4 | 18.2 |
| Total | | | 100 | 22.7 |

| | | | | |
|---|---|---|---|---|
| Chemical E: SNX-7046 manufactured by Nippon A&L K. K. (copolymer of styrene, butadiene and 2-vinylpyridine; solid: 41%) | | | | |

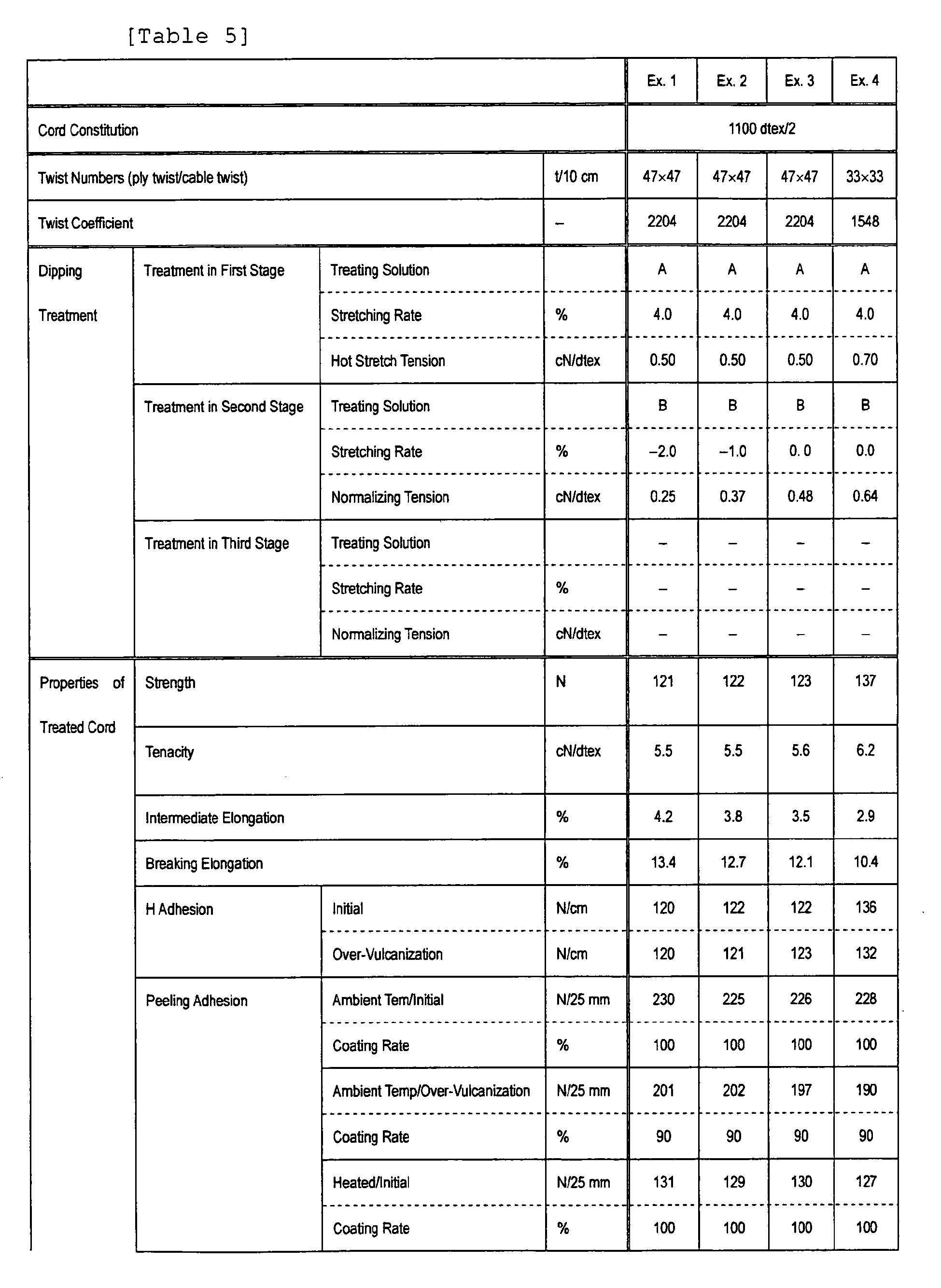

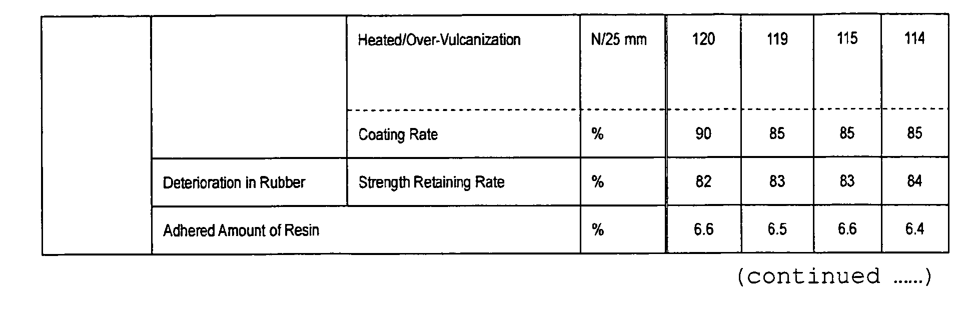

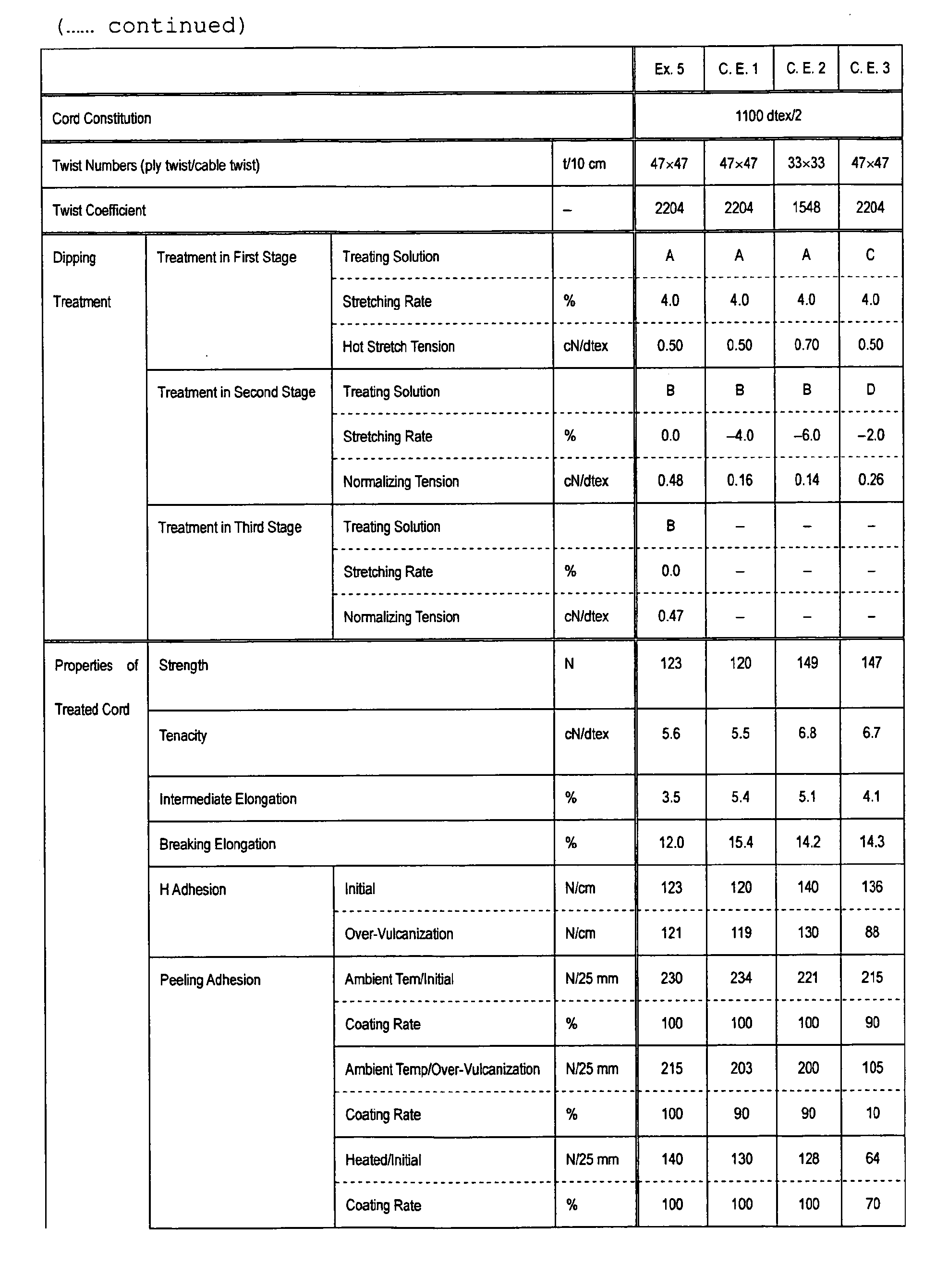

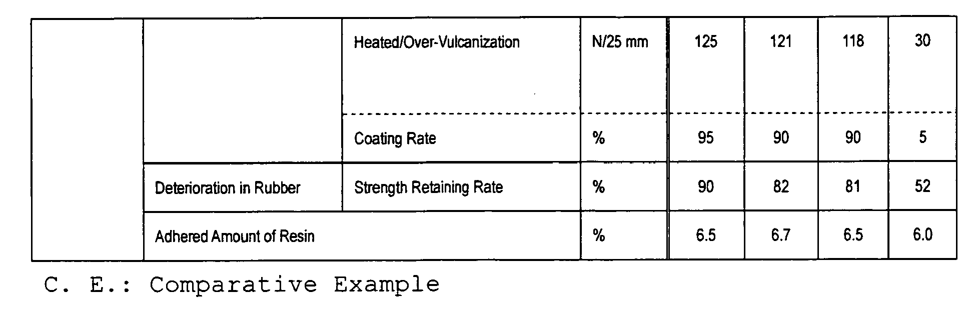

### Industrial Applicability

The polyester cord for reinforcement of rubber in accordance with the present invention has a high elastic modulus and significantly improved strength retaining property and heat-resisting adhesive property upon exposure to high temperature for long time in rubber whereby it is able to be utilized for tire cord or, particularly, for cap ply cord used in the outer layer part of belt of radical tire and greatly contributes in industry.

## Claims

1. A method for production of polyester cord for reinforcement of rubber, **characterized in that**, in bestowing adhesive property to rubber on a polyester fiber material, four members of (A) a treating solution containing a carrier, (B) an aqueous solution of a blocked isocyanate, (C) a dispersion of an epoxy compound and (D) a mixed solution of resorcinol-formaldehyde-latex (RFL) are combined as a treating solution and said polyester fiber material is subjected to a treatment by means of a one-stage or two or more multi-stage treatment, wherein said polyester fiber material is treated with a first treating solution compounded at least with (A) a treating solution containing a carrier, then treated with a second treating solution where at least (D) a mixed solution of resorcinol-formaldehyde-latex (RFL) is compounded and, after treating with the second treating solution in the final stage, a thermal treatment under a normalizing tension adjusted to not less than 0.2 cN/dtex is carried out.

2. The method for production of polyester cord for reinforcement of rubber according to claim 1, wherein, in bestowing adhesive property to rubber on a polyester fiber material, the treating stages are in two stages in which, after treating with a first treating solution where (A) a treating solution containing a carrier and (B) an aqueous solution of a blocked isocyanate are compounded, a thermal treatment is carried out and then a treatment using a second treating solution compounded with (B) an aqueous solution of a blocked isocyanate, (C) a dispersion of an epoxy compound and (D) a mixed solution of resorcinol-formaldehyde-latex (RFL) is carried out.

3. The method for production of polyester cord for reinforcement of rubber according to claim 1, wherein, in bestowing adhesive property to rubber on a polyester fiber material, the treating stages are in three stages in which, after treating with a first treating solution where (A) a treating solution containing a carrier and (B) an aqueous solution of a blocked isocyanate are compounded, a thermal treatment is carried out and then a second-stage treatment and a third-stage treatment both using a second treating solution compounded with (B) an aqueous solution of a blocked isocyanate, (C) a dispersion of an epoxy compound and (D) a mixed solution of resorcinol-formaldehyde-latex (RFL) are carried out.

4. The method for production of polyester cord for reinforcement of rubber according to any one of claims 1 to 3, wherein the normalizing tension is not less than 0.3 cN/dtex.

5. The method for production of polyester cord for reinforcement of rubber according to any one of claims 1 to 3, wherein the normalizing tension is not less than 0.4 cN/dtex.

6. The method for production of polyester cord for reinforcement of rubber according to any one of claims 1 to 5, wherein the polyester fiber material is a cord in which a polyethylene terephthalate fiber treated with an epoxy compound having two or more epoxy groups in a spinning, stretching or after-treating step is twisted and a textile by weaving of the same.

7. A tire cap ply cord using the polyester cord for reinforcement of rubber produced by the method according to any one of claims 1 to 6.

8. A polyester cord for reinforcement of rubber produced by the method according to any one of claims 1 to 6 in which tenacity of the treated cord is not less than 4.5 cN/dtex, elongation upon loading with 2.0 cN/dtex is not more than 5.0% and, in a peeling adhesion test at ambient temperature, a rubber coating rate after the initial vulcanization is not less than 90% while a rubber coating rate after an over-vulcanization is not less than 80%.

9. A polyester cord for reinforcement of rubber produced by the method according to any one of claims 1 to 6 in which tenacity of the treated cord is not less than 4.5 cN/dtex, elongation upon loading with 2.0 cN/dtex is not more than 5.0% and, in a peeling adhesion test upon heating under the atmosphere of 150°C, a rubber coating rate after the initial vulcanization is not less than 90% while a rubber coating rate after an over-vulcanization is not less than 80%.

10. The polyester cord for reinforcement of rubber according to claim 8 or 9, wherein the elongation of the treated cord upon loading with 2.0 cN/dtex is not more than 4.0%.

11. The polyester cord for reinforcement of rubber according to claim 8 or 9, wherein the elongation of the treated cord upon loading with 2.0 cN/dtex is not more than 3.5%.

12. The polyester cord for reinforcement of rubber according to any one of claims 8 to 11, wherein the twist coefficient K of the treated cord expressed by K = T√D is not more than 2,500 in which T is cable twist numbers (twisting times/10 cm) and D is a standard fineness of the cord (dtex).

13. A tire cap ply cord using the polyester cord for reinforcement of rubber according to any one of claims 8 to 12.
